# EUROPÄISCHE PATENTSCHRIFT

(11) **EP 1 763 642 B1**
(45) Veröffentlichungstag und Bekanntmachung des Hinweises auf die Patenterteilung: **02.03.2011**
(21) Anmeldenummer: 05774179.5
(22) Anmeldetag: 28.06.2005
(51) Int. Cl.: F16C 35/077

(54) **VORRICHTUNG ZUR ÜBERTRAGUNG EINES DREHMOMENTS**
DEVICE FOR TRANSMITTING A TORQUE
DISPOSITIF POUR TRANSMETTRE UN COUPLE

(30) Priorität: 30.06.2004 DE 102004031852
(43) Veröffentlichungstag der Anmeldung: 21.03.2007
(73) Patentinhaber: ROBERT BOSCH GMBH, 70442 Stuttgart (DE); Zexel Valeo Compressor Europe GmbH, 71634 Ludwigsburg (DE)
(72) Erfinder: STAUDENMAIER, Hans, 71334 Waiblingen (DE); DAMSON, Daniel, 71287 Weissach (DE); HASERT, Wolfram, 71384 Weinstadt (DE); JAEGER, Matthias, E-28413 El Boalo (ES); CASTILLO REDONDO, Angel Luis, E-28300 Aranjuez (ES); MARTINEZ LESMA, Alfonso, E-28300 Aranjuez (ES)
(86) Internationale Anmeldenummer: PCT/EP2005/053018
(87) Internationale Veröffentlichungsnummer: WO 2006/003142

(56) Entgegenhaltungen:
- DE-A1- 19 860 150
- FR-A- 2 273 974
- FR-A- 2 612 268
- US-A- 5 476 423

## Beschreibung

### Stand der Technik

Die Erfindung geht aus von einer Vorrichtung zur Übertragung eines Drehmoments.

Aus der DE 198 60 150 A1 ist eine Vorrichtung zur Übertragung eines Drehmoments von einem Verbrennungsmotor zu einem Kompressor bekannt, bei dem eine Riemenscheibe auf einem Kompressorgehäuse mit einem Wälzlager drehbar gelagert ist. Zur form- und kraftschlüssigen Verbindung einer mit der Riemenscheibe drehbaren Mitnehmerscheibe und einer Nabe des Kompressors ist an deren umfänglichen Kontaktflächen eine Profilierung angebracht, die so ausgelegt ist, dass bei einem Ansteigen des Drehmoments, etwa beim Blockieren des Kompressors, die Mitnehmerscheibe auf der Nabe drehbar beweglich wird. Die Herstellung einer kraftschlüssigen Verbindung mittels Profilierun erfordert einen hohen Bearbeitungsaufwand der Komponenten.

Aus der FR 2612268 A1 ist eine Klebeverbindung zwischen einem Lagerteil und einem Rotor und/oder einem Stator bekannt.

### Vorteile der Erfindung

Demgegenüber wird eine erfindungsgemäße Vorrichtung zum Übertragen eines Drehmoments mit einem Rotor vorgeschlagen, der mit einem Lagerteil eines Lagers drehfest verbundenen ist, bei dem zwischen dem Rotor und einer Mantelfläche des Lagers zumindest bereichsweise eine Klebeverbindung ausgebildet ist. Das Lager ist insbesondere ein Wälzlager. Die Klebeverbindung gewährleistet die Übertragung axialer Kräfte, die in der Regel um ein Vielfaches geringer sind als auftretende radiale Kräfte. Die Größe von Bereichen, insbesondere Spalte zwischen Rotor und Mantelfläche, an denen die Klebeverbindung vorgesehen ist und die Elastizität des Klebstoffs sind zweckmäßigerweise so gewählt, dass über den gesamten Temperaturbereich im Betrieb der Vorrichtung eine Beschädigung der Klebeverbindung vermieden werden kann. Erfindungsgemäß sind Klebstoffe auf Epoxidharzbasis, die z.B. im Vergleich zu anaeroben Klebstoffe eine höhere Elastizität aufweisen und größere Spaltbreiten füllen können. Je nach Einsatzbedingungen können jedoch auch andere Klebstoffe geeignet sein.

Erfindungsgemäß weist der Rotor auf seiner dem Lagerteil des Lagers zugewandten Seite umfänglich beabstandete, zu dem Wälzlager hin weisende Rippen auf. Dadurch können vorteilhaft Kontaktflächen für eine kraftschlüssige Verbindung zu der Mantelfläche des Lagers sowie Bereiche gebildet werden, die für Klebeverbindungen geeignet sind. Bevorzugt sind die Rippen an einem inneren Umfang des Rotors so ausgebildet, dass der Rotor das Lager umgibt. Denkbar ist jedoch auch, dass die Rippen alternativ an einem äußeren Umfang ausgebildet sind und der Rotor innerhalb des Lagers angeordnet ist.

Der Rotor ist vorzugsweise aus einem Kunststoff gebildet. Durch ein geeignetes Herstellverfahren ist eine derartige Profilierung des Rotors mit einfachen Werkzeugen zu bewerkstelligen. Eine aufwändige Nachbearbeitung eines Lagersitzes im Rotor kann entfallen.

Erfindungsgemäß ist die Klebeverbindung in Vertiefungen zwischen den Rippen angeordnet. Zweckmäßigerweise sind alle Vertiefungen mit Klebstoff gefüllt. Bevorzugt sind die Rippen kraftschlüssig mit der Mantelfläche des Wälzlagers verbunden.

Auf diese Weise wird eine vorteilhafte funktionale Trennung zwischen radialen und axialen Kräften erzielt. Die radialen Kräfte werden dabei vorrangig über die Rippen übertragen. Diese Rippen oder Stege stehen dabei in direktem Kontakt mit dem Lageraußenring. Der Lagersitz ist so ausgelegt, dass die Rippen sowohl bei niedrigen Temperaturen, als auch bei hohen Temperaturen immer in Kontakt mit dem Kugellager stehen. Dabei sind die unterschiedlichen Wärmeausdehnungskoeffizienten von Metall und Kunststoff berücksichtigt, so dass über den gesamten Temperaturbereich die radialen Kräfte über die Rippen aufgenommen werden.

Die axialen Kräfte, die das Wälzlager in seiner axialen Position halten, werden dabei vorteilhafterweise hauptsächlich über die Klebeverbindung aufgenommen. Dazu wird in die Taschen bzw. Vertiefungen zwischen den Rippen Klebstoff eingebracht.

Auf diese Weise wird dem technischen Problem Rechnung getragen, dass Klebstoffe im Allgemeinen Zug-Druck-Wechselbelastungen recht schlecht aufnehmen können.

Das umfängliche Flächenverhältnis von Vertiefungen und Rippen kann grundsätzlich beliebig sein. Erfindungsgemäß sind jedoch die Vertiefungen umfänglich breiter ausgebildet als die Rippen. Vorteilhafterweise sind die Rippen in ihrer Breite und ihrer Verteilung über den Umfang des Rotors ungleich, insbesondere nicht symmetrisch ausgebildet.

Eine Anzahl der als Stützbereiche dienenden Rippen sowie der als Taschen für den Klebstoff dienenden Vertiefungen kann beliebig gewählt werden. Bevorzugt ist die Anzahl der Rippen jedoch eine Primzahl. Ebenso ist die Anzahl der Vertiefungen bevorzugt eine Primzahl, zumindest jedoch ungerade. Dies führt vorteilhaft dazu, dass eine mögliche Schwingungsanregung eines Riementriebs, der beispielsweise mit einem als Riemenscheibe ausgebildeten Rotor in Antriebsverbindung steht, unterbunden werden kann.

Grundsätzlich können die Vertiefungen und die Rippen in beliebigen Geometrien ausgeführt sein. In einer günstigen Ausgestaltung sind für Übergänge von Vertiefungen zu Rippen Radien in dem vorzugsweise aus Kunststoff gebildeten Rotor vorgesehen.

Das Lager selbst kann ebenso eine beliebige Geometrie aufweisen, ebenso kann ein Lagerring, an dessen Mantelfläche der Rotor kraftschlüssig anliegt, eine beliebige Geometrie aufweisen. Vorteilhaft ist es, einen verstärkten Lagerring an derjenigen Seite des Lagers vorzusehen, an der der Rotor anliegt. So kann einer Deformation des Lagers aufgrund der nicht vollflächigen Belastung vorgebeugt wer den. Der Lageraußenring kann auch über seinen ganzen Umfang gegenüber einem Lagerinnenring des Lagers verstärkt sein, also beispielsweise eine größere Materialstärke aufweisen. Dieser verstärkte Lageraußenring stellt gleichzeitig damit auch einen thermischen Puffer für die vom Wälzlager erzeugte Reibungswärme dar. Es vergrößert sich dadurch auch die metallische Abstrahlfläche, so dass weniger der erzeugten Wärme an den Kunststoff übertragen werden muss.

In einem Verfahren zur Herstellung einer Vorrichtung zur Übertragung eines Drehmoments, insbesondere zur Herstellung einer mit einer Brennkraftmaschine verbundene Riemenscheibe zum Übertragen eines Drehmoments der Brennkraftmaschine auf ein Nebenaggregat, wobei ein Rotor mit einem Lagerteil eines Lagers drehfest verbunden wird, wird vorgeschlagen, dass ein Lagersitz des Rotors in einem Urform-Prozess bei der Herstellung des Rotors gebildet wird. Ein nachträgliches Bearbeiten des Lagersitzes kann entfallen. Vorzugsweise wird eine kraftschlüssige Verbindung des Rotors mit einer Mantelfläche des Lagers durch Aufschrumpfen des Rotors auf ein Lagerteil des Lagers oder des Lagerteils des Lagers auf den Rotor hergestellt. Die Herstellung ist einfach, rationell und kostengünstig, da ein nachträgliches Bearbeiten eines Lagersitzes im Rotor entfallen kann. Vielmehr wird der Lagersitz bereits bei der Herstellung des Rotors gebildet.. Es entsteht weniger Ausschuss, und separate Einlegeteile bei der Herstellung des Rotors, beispielsweise das Wälzlager, können entfallen, da ein Einbau des Wälzlagers erst nach der Herstellung des Rotors erfolgt. Vorzugsweise kontaktiert der Rotor das Lager an seiner Mantelfläche mit Rippen, die als Stützstrukturen dienen.

Erfindunsgsgemäß ist der Rotor in Vertiefungen an seiner dem Lagerteil des Lagers zugewandten Seite mit einem Klebstoff gefüllt. Die Vertiefungen sind erfindungsgemäß durch die Abstände zwischen den als Stützstruktur dienenden Rippen ausgebildet. Nach der Montage des Lagers kann der Klebstoff in die Vertiefungen zwischen den Rippen eingebracht werden. An der dem Einfüllbereich gegenüberliegenden Seite können Entlüftungskanäle eingebracht sein, die eine Entlüftung der befüllten Vertiefung erleichtern bzw. beschleunigen und gleichzeitig eine visuelle Kontrolle der Klebung erlauben.

Die Herstellung der Vorrichtung erfolgt vorteilhaft mit zwei Techniken, wobei jeder eine spezielle Funktion zukommt. Das Aufschrumpfen des Rotors auf das Lager gewährleistet bei entsprechender Dimensionierung, dass der kraftschlüssige Kontakt zwischen Rotor und Lager im gesamten Temperaturbereich der Anwendung aufrechterhalten bleibt.

Bevorzugt wird der Rotor in einem Urform-Prozess durch Spritzgießen oder Spritzprägen oder Kernprägen insbesondere aus Kunststoff hergestellt. Damit ist ein Gewichtsvorteil mit gleichzeitiger einfacher Herstellung verbunden. Eine Profilierung des Rotors an seiner Kontaktfläche zu einem Lager kann mit relativ einfachen Werkzeugen erzielt werden, ohne dass Einlegteile wie Metallbuchsen oder Kugellager in das Werkzeug eingelegt werden müssen. Dies vereinfacht die Werkzeugkonstruktion und vor allem den Spritzgießprozess, der somit sicherer und mit kürzerer Zykluszeit durchführbar ist. Die komplette Montage des Lagers, wie Eindrücken des Lagers, Dosierung des Klebstoffs, Aushärten des Klebstoffs, ist rationell und kostengünstig durchführbar. Ein nachträgliches Zerspanen des Lagersitzes entfällt.

Vorzugsweise ist die Vorrichtung so dimensioniert, dass eine maximale, durch unterschiedliche thermische Ausdehnungskoeffizienten des Lagerteils des Lagers und des Rotors erzeugte Belastung auf das Lager bei einer minimalen Einsatztemperatur erreicht wird. Bei einer bevorzugen Anordnung, bei der der Rotor das Lager umgibt, ist der thermische Ausdehnungskoeffizient des Rotors größer als der des Lagers. Vorteilhaft ist der Lagersitz so gestaltet, dass eine Schädigung des Rotors durch auftretende thermische Spannungen im Material vermieden wird. Vorteilhaft ist das Lager, insbesondere ein mit dem Rotor in Kontakt befindlicher Lagerring, so gestaltet, dass die durch den Druck, der durch unterschiedliche thermische Ausdehnungskoeffizienten hervorgerufen wird, unterhalb eines zulässigen Grenzwerts bleibt und so die Funktion und die Lebensdauer des Wälzlagers vorteilhaft beeinflusst wird.

Vorzugsweise wird eine minimale, durch unterschiedliche thermische Ausdehnungskoeffizienten des Lagerteils des Lagers und des Rotors erzeugte Belastung auf das Lager bei einer maximalen Einsatztemperatur erreicht. Für die minimale Belastung ist die Gestaltung so zu wählen, dass es zu keiner Ablösung zwischen Rotor und Lager kommt. Somit ist die Übertragung der radialen Kräfte zwischen Rotor und Lagerteil des Lagers stets gewährleistet.

Die Erfindung ist für Riemenscheiben geeignet, die zum Antreiben eines Klimakompressors in einem Fahrzeug eingesetzt werden. Sie kann bevorzugt für Rotoren eingesetzt werden, die im Innern mit einem Körper verbunden werden, der einen anderen thermischen Ausdehnungskoeffizienten besitzt als der Rotor und bei dessen Einsatz hohe radiale Kräfte, aber nur vergleichsweise geringe axiale Kräfte und Drehmomente übertragen werden müssen.

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von Zeichnungen dargestellten Ausführungsbeispielen der Erfindung.

Im folgenden zeigen:
- Fig. 1 a, b: einen seitlichen Schnitt durch einen Rotor nach seiner Herstellung (a) und einen Schnitt entlang der Linie IB-IB (b);
- Fig. 2 a, b: einen seitlichen Schnitt durch einen Rotor mit einge- presstem Lagerteil des Wälzlagers (a) und einen Schnitt entlang der Linie IIB-IIB (b); und
- Fig. 3 a, b, c: einen Querschnitt durch einen Rotor mit eingesetztem Lagerteil (a), einen Schnitt entlang der Linie IIIB-IIIB (b) und ein Detail des Schnitts im Bereich einer Klebever- bindung (c).

### Beschreibung des Ausführungsbeispiels

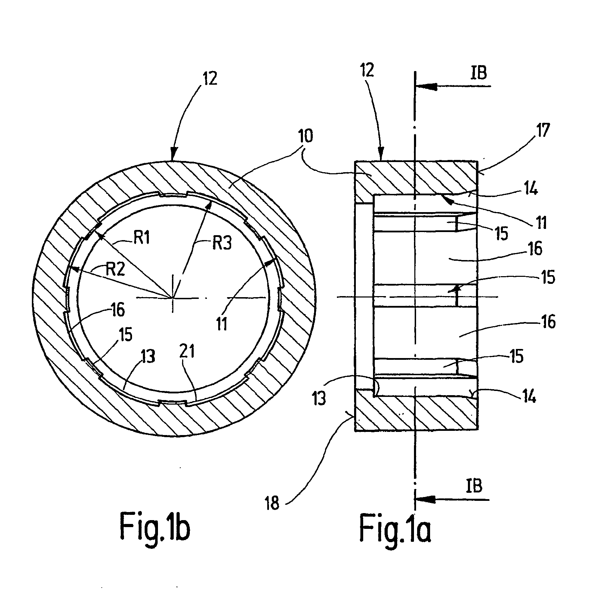

Figur 1a, b verdeutlicht die Erfindung anhand eines seitlichen Schnitts durch einen Rotor 10 nach seiner Herstellung (Figur 1a) und einen Schnitt entlang der Linie IB-IB (Figur 1b). Der Rotor 10 weist eine mit Rippen 15 versehene innere Seite 11 auf, wobei zwischen den Rippen 15 Vertiefungen 16 ausgebildet sind. An der Stirnseite 17 des Rotors 10 ist eine Schräge 14 vorgesehen, die ein Einführen eines nicht dargestellten Wälzlagers erleichtert. Im Bereich seiner Rückseite 18 ist der Innendurchmesser durch einen Absatz 13 verkleinert. Im Bereich der Rippen 15 weist der Rotor 10 einen ersten Radius R1 und im Bereich der Vertiefungen 16 einen dagegen größeren zweiten Radius R2 auf. Ein eingelegtes, nicht dargestelltes Innenteil würde einen äußeren Radius R3 aufweisen, der größer ist als der Radius R1, jedoch kleiner als R2. Dies ist durch eine dünne Linie angedeutet. Die Abmessungen sind so bemessen, dass der Rotor 10 auf ein solches Innenteil aufgeschrumpft werden kann, um eine kraftschlüssige Verbindung herzustellen. Das Innenteil kann beispielsweise ein Wälzlager, insbesondere ein Kugellager bzw. dessen äußerer Lagerring sein. An seiner Außenseite 12 kann ein Riementrieb oder dergleichen zum Antreiben des Rotors 10 vorgesehen sein. Es sind jeweils nur einige der Rippen 15 und Vertiefungen 16 mit Bezugszeichen bezeichnet.

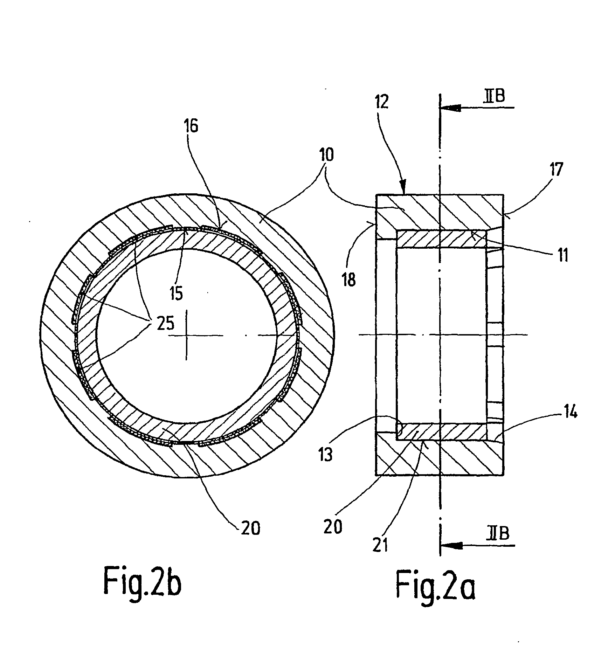

Die Situation mit einem auf ein Lagerteil 20 aufgeschrumpften Rotor 10 erläutern die Figur 2a und 2b. Figur 2a zeigt einen seitlichen Schnitt durch den Rotor 10 mit einem eingepresstem Lagerteil 20 eines Wälzlagers, wie beispielsweise eines Kugellagers, und Figur 2b zeigt einen Schnitt entlang der Linie IIB-IIB. Das Wälzlager selbst ist nicht dargestellt, sondern wird durch das als Lagerring ausgebildete Lagerteil 20 angedeutet. Das Lagerteil 20 kann beispielsweise der äußere Lagering eines aus zwei, gegeneinander verdrehbaren Lageringen bestehenden Wälzlager sein. Vergleichbare Elemente sind mit gleichen Bezugszeichen wie in Figur 1 bezeichnet.

Auf seiner dem Lagerteil 20 zugewandten Seite 11 weist der Rotor 10 umfänglich beabstandete, zu dem Lagerteil 20 hin weisende Rippen 15 auf, die als Stützstrukturen im aufgeschrumpften Zustand eine kraftschlüssige Verbindung zwischen Rotor 10 und Wälzlager gewährleisten.

In vorteilhafter Weise weist das Lager einen verstärkten Lageraußenring 20 auf, um eine mögliche Deformation des Außenringes au f-grund der nicht vollflächigen Belastung durch die Rippen 15 des Rotors 10 zu vermeiden. Der Lageraußenring weist gegenüber dem nicht gezeigten Lagerinnenring eine größere Materialstärke auf. Im Rippenbereich, in welchem insbesondere die radialen Kräfte aufgenommen werden, könnte ansonsten eventuell der Lageraußenring deformiert werden, was zu einer Beeinträchtigung der Funktion des Lagers führen könnte. Dieser verstärkte Lageraußenring stellt gleichzeitig auch einen thermischen Puffer für die vom Lager erzeugte Reibungswärme dar.

Zwischen dem Rotor 10 und einer Mantelfläche 21 des Wälzlagers bzw. dessen Lagerteils 20 ist eine Klebeverbindung 25 ausgebildet., wobei die Klebeverbindung 25 in Vertiefungen 16 zwischen den Rippen 15 angeordnet ist. Erfindungsgemäß sind die Vertiefungen 16 umfänglich breiter ausgebildet als die Rippen 15.

Die radialen Kräfte werden dabei vorrangig über die Rippen 15 übertragen. Diese Rippen 15 stehen dabei in direktem Kontakt mit dem Lageraußenring 20. Der Lagersitz ist so ausgelegt, dass die Rippen 15 sowohl bei niedrigen Temperaturen, als auch bei hohen Temperaturen immer in Kontakt mit dem Lager stehen. Dabei sind die unterschiedlichen Wärmeausdehnungskoeffizienten von Metall und Kunststoff berücksichtigt, so dass über den gesamten Temperaturbereich die radialen Kräfte über die Rippen 15 aufgenommen werden können.

Die axialen Kräfte, die das Wälzlager 20 in seiner axialen Position halten, werden dabei vorteilhafterweise hauptsächlich über die Klebeverbindung aufgenommen. Dazu wird in die taschenartigen Vertiefungen 16 zwischen den Rippen 15 der Klebstoff eingebracht.

Das umfängliche Flächenverhältnis von Vertiefungen und Rippen kann grundsätzlich beliebig sein. Erfindungsgemäß sind jedoch sind die Vertiefungen umfänglich breiter ausgebildet als die Rippen.

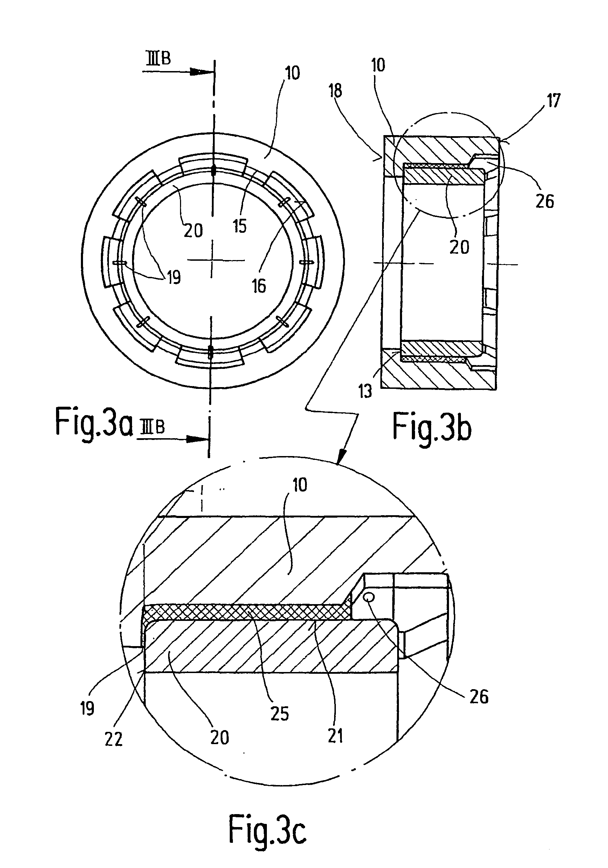

Die Figuren 3a, 3b, 3c zeigen einen Querschnitt durch einen Rotor 10 mit eingesetztem Lagerteil 20 (Figur 3a), einen Schnitt entlang der Linie IIIB-IIIB (Figur 3b) und ein Detail des Schnitts im Bereich einer Klebeverbindung 25 (Figur 3c). Vergleichbare Elemente sind mit gleichen Bezugszeichen wie in den Figuren 1 und 2 bezeichnet.

Im Bereich seiner Rückseite 18 weist der Rotor 10 einen Absatz 13 auf, in dessen von der Rückseite 18 abgewandten Oberfläche radial ausgerichtete, als Nuten ausgebildete Entlüftungskanäle 19 eingelassen sind. Die Entlüftungskanäle 19 liegen sind dem Absatz 13 und einer Unterseite 22 des Lagerteils 20 angeordnet. An seiner entgegengesetzten Stirnseite 17 weist der Rotor Erweiterungen 26 auf, die als Volumen zum Befüllen der Vertiefungen 16 mit Klebstoff dienen. Die Entlüftungskanäle 19 erleichtern das Befüllen der Vertiefungen mit Klebstoff und erlauben eine Kontrolle der Befüllung. Die Ausgestaltung der Entlüftungskanäle 19 kann grundsätzlich beliebig gestaltet sein.

Bei einem Verfahren zur Herstellung einer Vorrichtung zum Übertragen eines Drehmoments, insbesondere eine mit einer Brennkraftmaschine verbundene Riemenscheibe zum Übertragen eines Drehmoments der Brennkraftmaschine auf ein Nebenaggregat, wird ein Rotor 10 mit einem Lagerteil 20 eines Wälzlagers drehfest verbunden, wobei eine kraftschlüssige Verbindung des Rotors 10 mit einer Mantelfläche 21 des Wälzlagers durch Aufschrumpfen des Rotors 10 auf die Mantelfläche 21 hergestellt wird. Alternativ könnte auch umgekehrt das Wälzlager auf den Rotor 10 aufgeschrumpft werden. Vorzugsweise ist der Rotor 10 aus Kunststoff gebildet. Das Wälzlager ist günstigerweise aus Metall.

Die Form des Lagersitzes auf der inneren Seite 11 des Rotors 10 wird direkt in einem Urform-Prozess erzeugt, in dem der Rotor 10 hergestellt wird. Vorzugsweise erfolgt dies mit einem Spritzprozess, besonders bevorzugt wird der Rotor 10 durch Spritzgießen hergestellt. Alternativ kann der Rotor 10 mit Spritzprägen oder Kernprägen hergestellt werden. Ein nachträgliches Tempern des Rotors 10 ist daher ohne Belastung des Lagers bzw. des als Lageraußenring ausgebildeten Lagerteils 20 möglich. Anschließend wird das Wälzlager in den Rotor 10 eingedrückt. Dabei wird das Wälzlager bei Umgebungstemperatur in den erwärmten Rotor 10 eingelegt, so dass der Rotor 10 beim Abkühlen auf das Wälzlager bzw. dessen äußeren Lagerring aufschrumpft. Dadurch werden Rissbildungen, die durch einen Pressvorgang im kalten Zustand entstehen können, vermieden.

Nach der Lagermontage wird Klebstoff in die umfangseitigen Vertiefungen 16 eingebracht. Dies kann durch die durch die Erweiterungen 26 gebildeten Einfüllvolumina im oberen Bereich 17 der Vertiefungen 16 erleichtert werden. Die der Rückseite 18 gegenüberliegend angeordneten Entlüftungskanäle 19 erleichtern und beschleunigen das Befüllen der Vertiefungen 16.

Bei einer Verwendung eines warmaushärtenden Klebstoffs, insbesondere auf Epoxidharzbasis, ist es vorteilhaft, diesen in den erwärmten Rotor 10 einzubringen, so dass die Viskosität des Klebstoffs sinkt und sich jeweils die gesamte Vertiefung 16 vollständig mit Klebstoff füllt. Außerdem wird so die nachträgliche Aushärtzeit des Klebstoffs reduziert, da die Aufheizzeit des Rotors 10 entfällt oder wenigstens reduziert wird.

## Patentansprüche

1. Vorrichtung zum Übertragen eines Drehmoments, insbesondere eine mit einer Brennkraftmaschine verbundene Riemenscheibe zum Übertragen eines Drehmoments der Brennkraftmaschine auf ein Nebenaggregat, wobei ein Rotor (10) mit einem Lagerteil (20) eines Lagers drehfest verbunden ist, zwischen dem Rotor (10) und einer Mantelfläche (21) des Lagerteils (20) des Lagers zumindest bereichsweise eine Klebeverbindung (25) ausgebildet ist und der Rotor (10) auf seiner dem Lagerteil (20) des Lagers zugewandten Seite (11) umfänglich beabstandete, zu dem Lagerteil (20) des Lagers hin weisende Rippen (15) aufweist, wobei die Klebeverbindung (25) in Vertiefungen (16) zwischen den Rippen (15) angeordnet ist, die Vertiefungen (16) umfänglich breiter ausgebildet sind als die Rippen (15) und die Klebeverbindung (25) einen Klebstoff auf Epoxidharzbasis aufweist.

2. Vorrichtung nach Anspruch 1, **dadurch gekennzeichnet, dass** die Rippen (15) kraftschlüssig mit der Mantelfläche (21) des Lagerteils (20) des Lagers verbunden sind.

3. Vorrichtung nach einem der vorhergehenden Ansprüche, **dadurch gekennzeichnet, dass** für Übergänge von Vertiefungen (16) zu Rippen (15) Radien in der Seite (11) des Rotors (10) vorgesehen sind.

4. Vorrichtung nach einem der vorhergehenden Ansprüche, **dadurch gekennzeichnet, dass** das Lagerteil (20) durch einen Lageraußenring eines Wälzlagers gebildet wird.

5. Vorrichtung nach Anspruch 4, **dadurch gekennzeichnet, dass** der Lageraußenring (20) gegenüber einem Lagerinnenring des Wälzlagers verstärkt ausgebildet ist.

6. Vorrichtung nach einem der vorhergehenden Ansprüche, **dadurch gekennzeichnet, dass** der Rotor (10) in einem Urform-Prozess hergestellt ist.

7. Vorrichtung nach einem der vorhergehenden Ansprüche, **dadurch gekennzeichnet, dass** der Rotor (10) eine in dem Urform-Prozess erzeugte Form des Lagersitzes aufweist.

8. Vorrichtung nach einem der vorhergehenden Ansprüche, **dadurch gekennzeichnet, dass** eine kraftschlüssige Verbindung des Rotors (10) mit einer Mantelfläche (21) des Lagers vorgesehen ist, die durch Aufschrumpfen des Rotors (10) auf die Mantelfläche (21) oder der Mantelfläche (21) auf den Rotor (10) gebildet ist.

9. Vorrichtung nach einem der vorhergehenden Ansprüche, **dadurch gekennzeichnet, dass** der Lagersitz so ausgelegt ist, dass die Rippen (15) sowohl bei niedrigen als auch bei hohen Temperaturen in Kontakt mit dem Lager stehen und/oder dass radiale Kräfte über die Rippen (14) aufnehmbar sind.

10. Vorrichtung nach einem der vorhergehenden Ansprüche, **dadurch gekennzeichnet, dass** als Urform-Prozess Spritzgießen, Spritzprägen oder Kernprägen vorgesehen ist.

## Claims

1. Apparatus for transmitting a torque, in particular a pulley wheel which is connected to an internal combustion engine for transmitting a torque of the internal combustion engine to an auxiliary assembly, a rotor (10) being connected fixedly to a bearing part (20) of a bearing so as to rotate with it, an adhesive bonded joint (25) being formed at least in regions between the rotor (10) and a circumferential face (21) of the bearing part (20) of the bearing and, on its side (11) which faces the bearing part (20) of the bearing, the rotor (10) having ribs (15) which are spaced apart circumferentially and point towards the bearing part (20) of the bearing, the adhesive bonded joint (25) being arranged in depressions (16) between the ribs (15), the depressions (16) being of circumferentially wider configuration than the ribs (15) and the adhesive bonded joint (25) having an adhesive on the basis of epoxy resin.

2. Apparatus according to Claim 1, **characterized in that** the ribs (15) are connected non-positively to the circumferential face (21) of the bearing part (20) of the bearing.

3. Apparatus according to one of the preceding claims, **characterized in that** radii are provided in the side (11) of the rotor (10) for transitions from depressions (16) to ribs (15).

4. Apparatus according to one of the preceding claims, **characterized in that** the bearing part (20) is formed by a bearing outer ring of an anti-friction bearing.

5. Apparatus according to Claim 4, **characterized in that** the bearing outer ring (20) is of reinforced configuration with respect to a bearing inner ring of the anti-friction bearing.

6. Apparatus according to one of the preceding claims, **characterized in that** the rotor (10) is produced in a primary forming process.

7. Apparatus according to one of the preceding claims, **characterized in that** the rotor (10) has a shape of the bearing seat, which shape is produced in the primary forming process.

8. Apparatus according to one of the preceding claims, **characterized in that** a non-positive connection of the rotor (10) with a circumferential face (21) of the bearing is provided, which non-positive connection is formed by the rotor (10) being shrunk onto the circumferential face (21) or by the circumferential face (21) being shrunk onto the rotor (10).

9. Apparatus according to one of the preceding claims, **characterized in that** the bearing seat is designed in such a way that, both at low and at high temperatures, the ribs (15) are in contact with the bearing and/or that radial forces can be absorbed via the ribs (14).

10. Apparatus according to one of the preceding claims, **characterized in that** injection moulding, injection compression moulding or core stamping is provided as primary forming process.

## Revendications

1. Dispositif pour transmettre un couple, notamment poulie à courroie connectée à un moteur à combustion interne pour transmettre un couple du moteur à combustion interne à un groupe auxiliaire, un rotor (10) étant connecté de manière solidaire en rotation à une partie de palier (20) d'un palier, une connexion adhésive (25) étant réalisée au moins en partie entre le rotor (10) et une surface d'enveloppe (21) de la partie de palier (20) du palier, et le rotor (10) présentant, sur son côté (11) tourné vers la partie de palier (20) du palier, des nervures (15) espacées sur la périphérie, tournées vers la partie de palier (20) du palier, la connexion adhésive (25) étant disposée dans des renfoncements (16) entre les nervures (15), les renfoncements (16) étant réalisés de manière plus large sur la périphérie que les nervures (15) et la connexion adhésive (25) présentant un adhésif à base de résine époxy.

2. Dispositif selon la revendication 1, **caractérisé en ce que** les nervures (15) sont connectées par engagement par force à la surface d'enveloppe (21) de la partie de palier (20) du palier.

3. Dispositif selon l'une quelconque des revendications précédentes, **caractérisé en ce que** l'on prévoit pour des transitions des renfoncements (16) aux nervures (15) des rayons dans le côté (11) du rotor (10).

4. Dispositif selon l'une quelconque des revendications précédentes, **caractérisé en ce que** la partie de palier (20) est formée par une bague extérieure de palier d'un palier à roulement.

5. Dispositif selon la revendication 4, **caractérisé en ce que** la bague extérieure de palier (20) est réalisée de manière renforcée par rapport à une bague intérieure de palier du palier à roulement.

6. Dispositif selon l'une quelconque des revendications précédentes, **caractérisé en ce que** le rotor (10) est fabriqué dans un processus de formage de base.

7. Dispositif selon l'une quelconque des revendications précédentes, **caractérisé en ce que** le rotor (10) présente une forme du siège de palier produite dans le processus de formage de base.

8. Dispositif selon l'une quelconque des revendications précédentes, **caractérisé en ce qu'**il est prévu une connexion par engagement par force du rotor (10) à une surface d'enveloppe (21) du palier, qui est formée par emmanchage par frettage du rotor (10) sur la surface d'enveloppe (21) ou de la surface d'enveloppe (21) sur le rotor (10).

9. Dispositif selon l'une quelconque des revendications précédentes, **caractérisé en ce que** le siège de palier est conçu de telle sorte que les nervures (15) soient en contact avec le palier à la fois à basse température et à température élevée, et/ou **en ce que** des forces radiales peuvent être reçues par le biais des nervures (14).

10. Dispositif selon l'une quelconque des revendications précédentes, **caractérisé en ce que** l'on prévoit comme processus de formage de base un moulage par injection, un matriçage par injection ou un matriçage de noyau.
